# FASCICULE DE BREVET EUROPEEN

(11) **EP 3 339 171 B1**
(45) Date de publication et mention de la délivrance du brevet: **24.04.2019**
(21) Numéro de dépôt: 17204216.0
(22) Date de dépôt: 28.11.2017
(51) Int. Cl.: B64C 27/12

(54) **CARTER DE BOITE DE TRANSMISSION DE PUISSANCE, BOITE DE PUISSANCE ET AERONEF**
GEHÄUSE EINES LEISTUNGSÜBERTRAGUNGSGETRIEBES, LEISTUNGSÜBERTRAGUNGSGETRIEBE UND LUFTFAHRZEUG
A GEARBOX CASING, A GEARBOX, AND AN AIRCRAFT

(30) Priorité: 22.12.2016 FR 1601841
(43) Date de publication de la demande: 27.06.2018
(73) Titulaire: Airbus Helicopters, 13725 Marignane Cedex (FR)
(72) Inventeur: SOLA, Cyril, 13300 Salon de Provence (FR); REY, Thierry, 13090 Aix en Provence (FR); LAPEYRE, Jean-Victor, 13680 Lancon-de-Provence (FR); MONIOT, Philippe, 63500 Bergogne (FR); BOURDIER, Laurent, 63500 Issoire (FR)
(74) Mandataire: GPI & Associés

(56) Documents cités:
- FR-A1- 2 777 861
- US-A- 3 502 290
- US-A- 3 875 823

## Description

La présente invention concerne un carter de boîte de transmission de puissance, une boîte de transmission de puissance et un aéronef muni de ce carter.

Un aéronef peut comporter une boîte de transmission de puissance qui est interposée entre un ensemble moteur et un moyen de propulsion. Par exemple, un hélicoptère peut comporter une boîte de transmission de puissance qui est interposée mécaniquement entre au moins un moteur et un rotor, ce rotor participant au moins partiellement à la sustentation voire à la propulsion de l'hélicoptère.

Une boîte de transmission de puissance comporte des organes mécaniques tournants. Par exemple, une boîte de transmission de puissance comprend au moins un étage de réduction de vitesse de rotation qui est destiné à réduire la vitesse de rotation d'un arbre tournant. Cet étage de réduction de vitesse de rotation peut prendre la forme d'un train épicycloïdal. Un porte-satellites de cet étage de réduction de vitesse de rotation est alors par exemple solidaire d'un mât rotor qui entraîne en rotation le rotor. Ce mât rotor peut comprendre un ou plusieurs arbres.

Les organes mécaniques tournants sont logés au sein d'une enveloppe extérieure. Cette enveloppe d'une boîte de transmission de puissance peut comprendre plusieurs éléments dénommés « carters » par la suite. Par exemple, l'enveloppe comporte successivement et en élévation un carter inférieur formant un fond de la boîte de transmission, puis un carter supérieur et un carter dénommé « carter de portance ».

Les étages de réduction de vitesse de rotation et les engrenages d'entrée de la boîte de transmission de puissance peuvent être logés dans le carter inférieur. Dès lors, l'expression « boîte de transmission de puissance » désigne parfois ce sous-ensemble.

Le carter supérieur et le carter de portance sont traversés par le mât rotor.

Le carter de portance peut être muni de moyens de roulement qui entourent le mât rotor pour le guider. De plus, le carter de portance peut comprendre des moyens de fixation pour porter des barres de suspension.

Dans ce contexte, le carter supérieur, éventuellement conique, permet de lier mécaniquement le carter de portance au carter inférieur. De plus, le carter supérieur est boulonné au carter de portance et au carter inférieur pour permettre la transmission d'efforts et de moments du carter de portance vers le carter inférieur.

Ce carter supérieur présente une forme complexe pour porter divers équipements. Par exemple, le carter supérieur peut comprendre des excroissances pour porter des capteurs destinés à mesurer la vitesse de rotation du mât rotor, des tuyauteries, des bouchons magnétiques...

En raison des divers équipements portés par le carter supérieur et des efforts et moments à transmettre, le carter supérieur est usuellement réalisé à partir de métaux, et par exemple de titane ou d'alliage d'aluminium, à l'instar du carter de portance et du carter inférieur. Par suite, l'enveloppe extérieure de la boîte de transmission de puissance et notamment le carter supérieur peuvent présenter une masse non négligeable.

Les documents US 3875823, US 3502290 et FR 2777861 sont aussi connus.

La présente invention a alors pour objet de proposer un carter supérieur innovant tendant à présenter une masse optimisée.

L'invention concerne donc un carter supérieur destiné à être fixé à un carter inférieur et à un carter de portance d'une boîte de transmission de puissance.

Ce carter supérieur comporte :
- une coque creuse en matériaux composites, la coque présentant une paroi latérale s'étendant en élévation d'une embase d'enveloppe ouverte vers une collerette d'enveloppe ouverte, la paroi latérale délimitant transversalement un espace interne creux de la coque s'étendant le long d'un axe d'extension et débouchant sur un milieu extérieur situé à l'extérieur de la coque via une ouverture inférieure de l'embase d'enveloppe et une ouverture supérieure de la collerette d'enveloppe, la paroi latérale comportant au moins une découpe, la collerette d'enveloppe étant destinée à être fixée au carter de portance et l'embase d'enveloppe étant destinée à être fixée au carter inférieur,
- une doublure interne qui est insérée dans la coque creuse et fixée à la coque creuse, la doublure comprenant une base en forme de couronne décrivant une ligne fermée et un sommet en forme de couronne décrivant une autre ligne fermée, au moins deux jambes s'étendant en élévation de la base au sommet, la doublure comprenant au moins un support d'équipement au regard d'une dite découpe, chaque support d'équipement étant destiné à porter un équipement amovible du carter supérieur.

L'expression « embase d'enveloppe ouverte » fait référence à un solide matérialisant le pourtour de l'ouverture inférieure. L'embase d'enveloppe a par exemple une forme d'une couronne, éventuellement non circulaire, comprise radialement entre une ligne externe et une ligne interne, la ligne interne décrivant le pourtour de l'ouverture inférieure.

De même l'expression « collerette d'enveloppe » fait référence à un solide matérialisant le pourtour de l'ouverture supérieure. La collerette d'enveloppe a par exemple la forme d'une couronne, éventuellement non circulaire, comprise radialement entre une ligne externe et une ligne interne, la ligne interne décrivant le pourtour de l'ouverture supérieure.

L'expression « support d'équipement » désigne un support permettant de porter un équipement, tel que par exemple un capteur de vitesse de rotation, un bouchon magnétique, une tuyauterie.

Dans ce contexte, certains arts antérieurs décrivent un carter supérieur qui est monobloc et métallique. La fabrication d'un carter supérieur en matériaux composites parait en effet difficile à réaliser voire même impossible industriellement, en raison de sa géométrie complexe du fait de la présence des supports d'équipement.

L'invention propose un carter supérieur qui n'est pas monobloc mais pourvu d'au moins deux pièces distinctes fixées l'une à l'autre.

Ainsi, le carter supérieur comporte une coque. Cette coque est munie de bas en haut d'une embase d'enveloppe, d'une paroi latérale par exemple en forme de cône tronqué, et de la collerette d'enveloppe. L'embase d'enveloppe ainsi que la paroi latérale et la collerette d'enveloppe peuvent par exemple former une seule et unique pièce mécanique monobloc, par exemple obtenus par moulage.

De plus, le carter supérieur comporte une doublure munie des supports d'équipements usuels.

La coque est donc une pièce structurelle visant notamment à assurer la transmission d'efforts et de moments. Par contre, la coque n'est pas munie des supports d'équipements usuels. Dès lors, la coque peut avoir une forme géométrique relativement simple permettant sa fabrication en matériaux composites.

En outre, la doublure a pour fonction de permettre l'agencement d'équipements, par exemple au moins un capteur mesurant une vitesse de rotation d'un mât rotor et / ou au moins une tuyauterie et/ou au moins un bouchon magnétique. Dès lors, cette doublure ne doit pas nécessairement résister à des efforts et des moments importants, et peut donc être structurellement relativement simple.

Ainsi, la doublure permet de simplifier la géométrie de la coque, et autorise donc la fabrication de la coque en matériaux composites. Dès lors, l'invention permet d'obtenir un carter supérieur au moins partiellement en matériaux composites.

La combinaison de la coque et de la doublure peut ainsi permettre d'obtenir un carter supérieur présentant les niveaux de performances requis en termes de cheminement d'efforts et de moments, tout en présentant une masse optimisée.

Le carter supérieur peut de plus comprendre une ou plusieurs des caractéristiques qui suivent.

Par exemple, la coque peut comporter une tresse multidirectionnelle, et une pluralité de plis de renfort local unidirectionnels, chaque pli de renfort comprenant des fibres préimprégnées s'étendant en élévation.

Les fibres préimprégnées s'étendent par exemple au moins en regard d'une servocommande d'un rotor. Les fibres préimprégnées permettent notamment de diriger les flux d'efforts.

Une tresse est un article textile obtenu par tissage de fibres, par exemple des fibres de carbone. Dans une tresse, les fibres sont entrecroisées régulièrement et décrivent une trajectoire particulière.

Une tresse multidirectionnelle comprend des fibres qui s'étendent suivant des trajectoires non parallèles. Par exemple, une tresse bidirectionnelle comprend des fibres s'étendant selon deux directions, par exemple inclinées respectivement de plus 45 degrés et moins 45 degrés par rapport à une direction médiane. La tresse peut être une gaine standard de 19 pouces.

La tresse est donc obtenue à partir de matériaux composites, et peut avoir une forme conique.

Par ailleurs, les fibres préimprégnées des plis de renfort peuvent être du type connu sous la dénomination G947 M18 par exemple. Les fibres des plis de renfort sont ainsi obtenues à partir de matériaux composites. Les plis de renfort peuvent être disposés localement ou sur toute la tresse.

Une résine, par exemple du type connu sous la dénomination RTM6 peut être en outre utilisée pour préimprégner les fibres.

Les plis de renfort et/ou la tresse peuvent être des constituants au moins de la paroi latérale, voire aussi de l'embase d'enveloppe et/ou de la collerette d'enveloppe.

Selon un autre aspect, l'embase d'enveloppe peut comporter au moins localement un renfort métallique ou composite agencé entre des plis de fibres, préimprégnées, le renfort comprenant des passages en vis-à-vis d'alvéoles desdits plis de fibres, les passages et lesdites alvéoles étant destinés à être traversés par des moyens de vissage.

Les moyens de vissage comprennent par exemple des boulons, goujons ou équivalents.

Chaque renfort représente une pièce mécanique permettant de renforcer localement la coque. Le renfort peut comporter un treillis de manière à présenter une masse optimisée.

De plus, chaque renfort scinde localement la peau de la coque en deux groupes ce qui peut tendre à limiter les risques de délaminage des matériaux dans une zone subissant des efforts et des moments importants.

Ces deux groupes peuvent inclure chacun des plis de fibres, par exemple de carbone. Eventuellement, au moins un groupe peut comprendre des plis d'interface en fibres de verre. Ces plis de fibres de verre tendent à limiter les risques de corrosion galvanique au contact d'un autre carter métallique.

La coque peut être fabriquée par moulage, et notamment par la méthode connue sous l'expression « RTM », l'acronyme RTM correspondant à l'expression anglaise « Resin Transfert Molding ». Les divers éléments de la coque sont ainsi positionnés entre un moule et un contre moule, de la résine étant selon ce procédé injectée dans l'intervalle séparant le moule et le contre moule.

Selon un autre aspect, la doublure peut être réalisée à partir d'un matériau du groupe des matières thermodurcissables ou métallique.

Par exemple, la doublure peut être réalisée à partir d'un matériau connu sous la dénomination ULTEM.

La doublure peut être fabriquée par prototypage rapide.

Selon un autre aspect, la collerette d'enveloppe pouvant s'étendre en élévation d'une face d'appui inférieure plane à une face d'appui supérieure plane qui est destinée à être agencée contre ledit carter de portance, le carter supérieur peut comporter un insert en forme de couronne agencé en élévation entre la collerette d'enveloppe et le sommet de la doublure, l'insert étant apposé contre la face d'appui inférieure, l'insert comprenant des trous filetés, chaque trou fileté étant aligné avec un orifice traversant de la collerette d'enveloppe.

Le terme « traversant » signifie que chaque orifice débouche sur la face d'appui inférieure et la face d'appui supérieure.

Un tel insert est par exemple métallique. L'insert peut par exemple comporter des plaquettes écrou ou équivalents pour former les trous filetés.

Cet insert vise à optimiser la fixation de la coque à un carter de portance.

Selon un autre aspect, la collerette d'enveloppe peut s'étendre de la paroi latérale vers l'axe d'extension, l'embase d'enveloppe s'étendant à partir de la paroi latérale en s'éloignant de l'axe d'extension.

Selon un autre aspect, la doublure peut comprendre un support d'équipement en regard de chaque découpe de ladite coque.

Selon un autre aspect, le sommet peut comporter un larmier, ledit larmier ayant une section, par exemple en forme de U, ouverte vers la collerette d'enveloppe, au moins deux jambes étant solidaires du larmier.

Un tel larmier peut être disposé au niveau et autour d'un organe d'un mât rotor tendant à projeter vers l'extérieur un liquide de lubrification par centrifugation. Le larmier permet de recueillir un liquide de lubrification pour surveiller ce liquide, par exemple à l'aide d'un bouchon magnétique.

Selon un autre aspect, au moins une jambe peut comporter un conduit formant une tuyauterie intégrée de la doublure.

Selon un autre aspect, la doublure peut comporter au moins une tuyauterie supérieure qui s'étend d'un fond dudit larmier jusqu'à un support d'équipement, ce support d'équipement présentant une cavité ouverte sur la tuyauterie supérieure, ce support d'équipement présentant un canal qui débouche sur ladite cavité et sur ledit milieu l'extérieur via une dite découpe, un bouchon magnétique amovible obturant ledit canal, la doublure comprenant une tuyauterie inférieure partant de ladite cavité vers ladite embase d'enveloppe.

L'expression « obturant » signifie que le bouchon magnétique tend à éviter une fuite de liquide hydraulique vers le milieu extérieur.

Selon un autre aspect, l'embase d'enveloppe peut comporter une gorge apte à accueillir un joint d'étanchéité.

Un joint d'étanchéité peut équiper la doublure. La fabrication de la coque est facilitée lorsque la gorge est présente sur la doublure.

Selon un autre aspect, au moins un support d'équipement peut être porté par au moins une jambe de renfort.

Selon un autre aspect, au moins un support d'équipement peut être porté par au moins la base ou le sommet de la doublure.

Selon un autre aspect, la doublure peut être collée à ladite coque.

L'invention vise aussi une boîte de transmission de puissance comprenant une enveloppe extérieure, l'enveloppe extérieure comprenant un carter inférieur fixé à un carter supérieur ainsi qu'un carter de portance fixé au carter supérieur. Le carter supérieur est du type de 'l'invention décrit précédemment.

La boîte de transmission de puissance pouvant comprendre, et entraîner, un mât rotor, au moins un capteur de mesure d'une vitesse de rotation du mât rotor peut être fixé à un support d'équipement.

De même, au moins un bouchon magnétique peut équiper le carter.

L'invention vise de plus un aéronef muni d'une boîte de transmission de puissance selon ladite invention.

L'invention et ses avantages apparaîtront avec plus de détails dans le cadre de la description qui suit avec des exemples donnés à titre illustratif en référence aux figures annexées qui représentent :
- la figure 1, un schéma illustrant une boîte de transmission de puissance selon l'invention,
- la figure 2, un schéma montrant un carter supérieur de la boîte de transmission de puissance,
- la figure 3, une vue éclatée de ce carter supérieur.
- la figure 4, une coupe schématique d'une coque ,
- la figure 5, un schéma présentant un bouchon magnétique et porté par un support d'équipement,
- la figure 6, un schéma présentant un capteur mesurant une vitesse de rotation et agencé dans un support d'équipement.

Les éléments présents dans plusieurs figures distinctes sont affectés d'une seule et même référence.

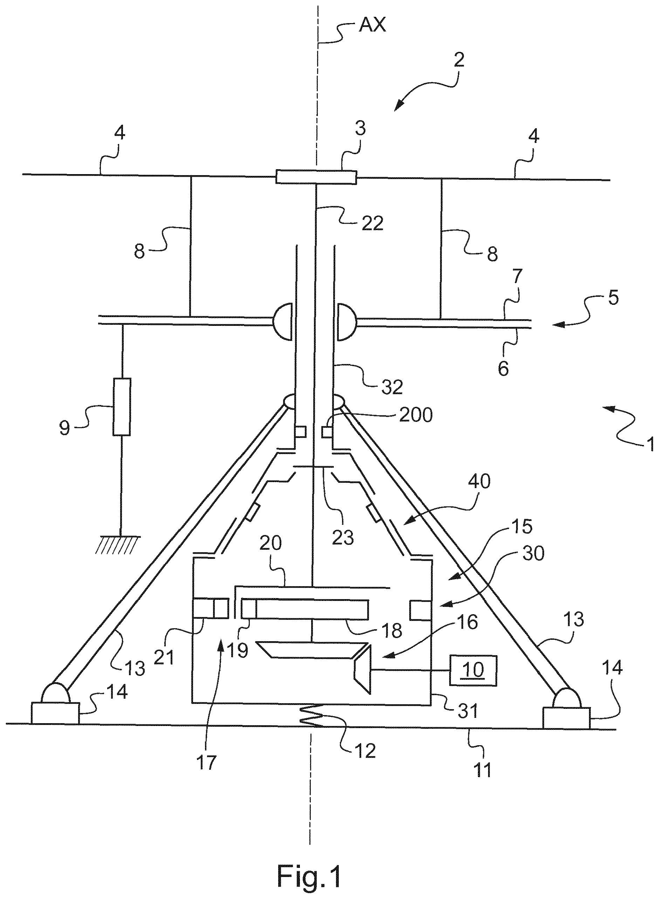

La figure 1 présente un carter supérieur 40 selon l'invention. Ce carter supérieur 40 peut par exemple être agencé sur une boîte de transmission de puissance 15 d'un aéronef 1.

Par exemple, cet aéronef 1 comprend un rotor 2. Ce rotor 2 peut participer au moins partiellement à la sustentation et/ou à la propulsion de l'aéronef 1. Ce rotor 2 comprend une pluralité de pales 4. Ces pales 4 sont portées par une tête rotor 3, tel qu'un moyeu éventuellement.

Selon un autre aspect, le pas des pales peut être contrôlé par au moins une servocommande 9. Par exemple, au moins trois servocommandes 9 sont individuellement articulées à un plateau non tournant 6 d'un ensemble de plateaux cycliques 5. Un plateau tournant 7 de l'ensemble de plateaux cycliques 5 est alors relié à chaque pale via au moins une bielle 8.

Pour mettre en rotation les pales 4 autour d'un axe de rotation du rotor 2, l'aéronef peut comprendre au moins un moteur 10. Ce moteur 10 met en mouvement une boîte de transmission de puissance 15, la boîte de transmission de puissance 15 comprenant un mât rotor 22 solidaire en rotation du rotor 2.

La boîte de transmission de puissance comporte une pluralité d'organes tournants qui sont interposés entre le moteur 10 et le mât rotor. Ces organes tournants peuvent inclure un étage de réduction de vitesse de rotation 17. Par exemple, un engrenage d'entrée 16 est relié à au moins un moteur 10 par une chaîne mécanique de puissance. Cet engrenage d'entrée 16 est par exemple relié par un arbre à un pignon planétaire 18 d'un étage de réduction de vitesse de rotation 17. Le pignon planétaire 18 est en prise avec au moins un pignon satellite 19 qui roule sur une couronne dentée 21 de l'étage de réduction de vitesse de rotation 17. Les pignons satellites 19 sont portés par un porte-satellites 20 qui est solidarisé au mât rotor 22.

Les organes tournants sont agencés au sein d'une enveloppe extérieure 30. Cette enveloppe extérieure 30 comprend un carter inférieur 31 entourant notamment l'engrenage d'entrée 16 et l'étage de réduction de vitesse de rotation 17. Un système de suspension 12 usuel peut s'étendre entre le carter inférieur 31 et un plancher 11.

Le carter inférieur 31 est fixé à un carter supérieur 40 selon l'invention. Ce carter supérieur 40 est alors fixé à un carter de portance 32.

Le carter de portance 32 peut porter au moins un système de roulement à billes ou à rouleaux 200 guidant le mât rotor. Un tel système de roulement à billes ou à rouleaux 200 est lubrifié par un système de lubrification usuel. Le liquide de lubrification peut s'écouler le long du mât rotor et atteindre un moyen de projection 23 tendant à déplacer par centrifugation le liquide de lubrification vers le carter supérieur. Le moyen de projection 23 peut prendre la forme d'un épaulement du mât rotor par exemple.

Par ailleurs, le carter de portance peut être articulé à des barres de suspension 13. Chaque barre de suspension 13 peut en outre être articulée à un dispositif de suspension 14 qui est fixé au plancher 11.

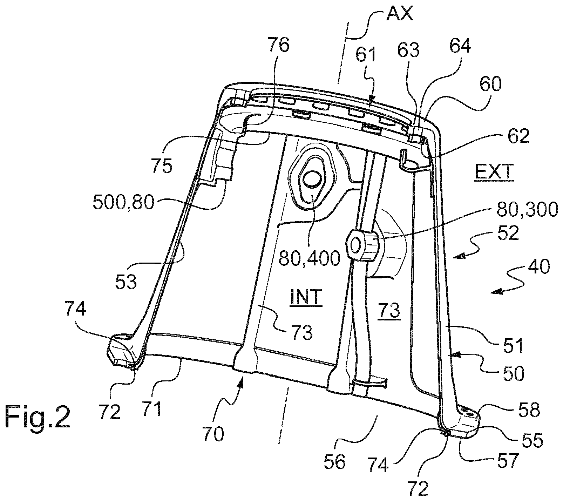

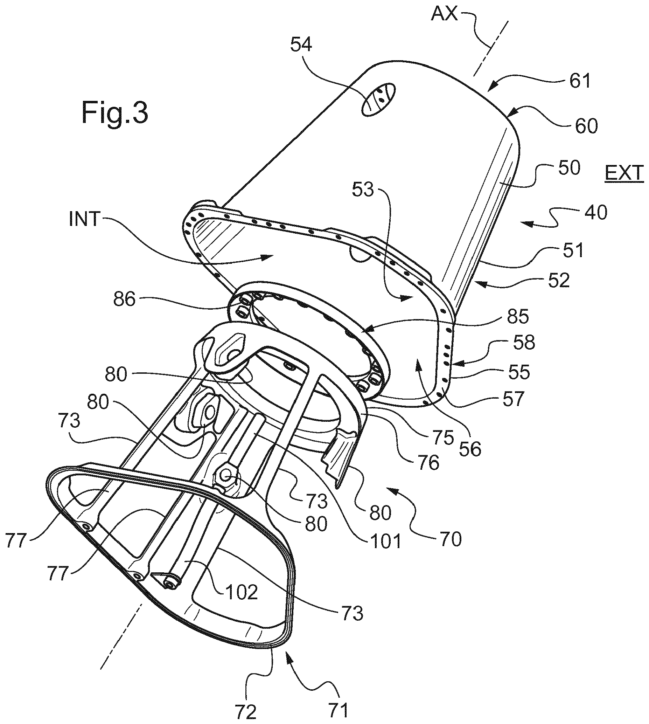

La figure 2 illustre un carter supérieur 40 selon l'invention. La figure 3 présente une vue éclatée de ce carter supérieur 40.

Le carter supérieur 40 comporte une coque 50. Cette coque 50 est creuse en ayant sensiblement une forme conique, à section éventuellement non circulaire.

En effet, la coque 50 présente une paroi latérale 51 s'étendant en élévation le long d'un axe d'extension AX d'une embase d'enveloppe 55 jusqu'à une collerette d'enveloppe 60. L'axe d'extension AX est par exemple confondu en fonctionnement avec l'axe de rotation du rotor.

La paroi latérale 51 décrit une surface fermée qui délimite transversalement un espace interne INT. Dès lors, la paroi latérale 51 s'étend transversalement selon son épaisseur d'une face interne 53 en regard de l'espace interne vers une face externe 52 en regard d'un milieu extérieur EXT situé à l'extérieur de la coque 50.

Le terme « transversalement » fait référence à chaque direction perpendiculaire à l'axe d'extension AX.

L'espace interne INT débouche sur le milieu extérieur EXT via une ouverture inférieure 56 de l'embase d'enveloppe 55 et une ouverture supérieure 61 de la collerette d'enveloppe 60.

A cet effet, l'embase d'enveloppe 55 forme le pourtour de l'ouverture inférieure 56. L'embase d'enveloppe 55 présente ainsi une paroi qui s'étend transversalement à partir de la paroi latérale, par exemple en s'éloignant de l'axe d'extension AX. L'embase d'enveloppe 55 s'étend en épaisseur et en élévation d'une face inférieure 57 à accoler contre le carter inférieur vers une face supérieure 58. Des perçages de fixation peuvent traverser de part en part cette épaisseur de l'embase d'enveloppe 55 pour par exemple boulonner le carter supérieur 40 au carter inférieur 31.

De même, la collerette d'enveloppe 60 forme le pourtour de l'ouverture supérieure 61. La collerette d'enveloppe 60 présente ainsi une paroi qui s'étend transversalement à partir de la paroi latérale, par exemple en se rapprochant de l'axe d'extension AX. La collerette d'enveloppe 60 s'étend en épaisseur et en élévation d'une face d'appui inférieure 62 plane à une face d'appui supérieure 63 plane à accoler contre le carter de portance 32. Des perçages de fixation peuvent traverser de part en part cette épaisseur de la collerette d'enveloppe 60 pour par exemple boulonner le carter supérieur 40 au carter de portance 32.

Par ailleurs, la paroi latérale 51 comporte au moins une découpe 54. Une telle découpe 54 permet l'agencement d'équipements amovibles.

Par suite, la coque 50 possède une géométrie relativement simple pour pouvoir être fabriquée à partir de matériaux composites, éventuellement en utilisant une méthode fabrication RTM.

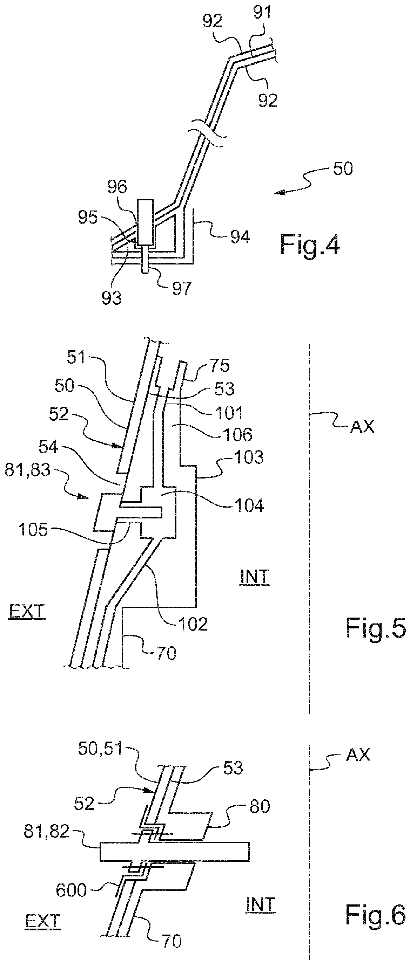

La figure 4 illustre de manière schématique divers matériaux pouvant constituer la coque. Ces divers matériaux sont notamment liés par une résine non représentée. L'agencement présenté est donné à des fins illustratives.

Ainsi, la coque 50 peut comporter une tresse multidirectionnelle 91, au niveau de la paroi latérale voire de l'embase d'enveloppe et/ou de la collerette d'enveloppe.

De plus, la coque 50 peut comprendre une pluralité de plis de renfort 92 unidirectionnels. Chaque pli de renfort 92 comprend par exemple des fibres préimprégnées, par exemple des fibres de carbone. Ces fibres peuvent s'étendre en élévation et, le cas échéant, en regard d'une servocommande. Les plis de renfort 92 peuvent être positionnés au niveau de la paroi latérale, voire de l'embase d'enveloppe et/ou de la collerette d'enveloppe

De plus, la coque 50 peut comprendre au moins un renfort noyé dans l'embase d'enveloppe 55. Ainsi, l'embase d'enveloppe 55 peut comporter au moins localement un renfort 93 métallique ou composite. Un tel renfort 93 est agencé entre des plis de fibres, ces plis de fibres pouvant comprendre des plis d'interface en fibres de verre 94. Le renfort 93 possède des passages 95 en vis-à-vis d'alvéoles 96 des plis de fibres pour constituer des perçages coopérant avec des moyens de vissage 97. Ainsi, un boulon peut par exemple traverser de part en part l'embase d'enveloppe 55.

Par ailleurs et en référence à la figure 2, le carter supérieur comporte une doublure 70 interne.

La doublure 70 est une pièce distincte de la coque 50 qui est insérée dans la coque 50. De plus, la doublure 70 peut être fixée à la coque par des moyens de collage, de vissage, de rivetage... Par exemple, la doublure 70 peut être au moins collée à la coque. Plus précisément, la doublure 70 peut être fixée au moins à la face interne 53 de la paroi latérale.

La doublure 70 peut comprendre successivement et en élévation une base 71, au moins deux jambes 73 puis un sommet 75.

La base 71 peut être conformée à l'embase d'enveloppe 55. En outre, la base 71 peut avoir une forme de couronne, au sens large du terme, qui n'est pas nécessairement circulaire. Ainsi, la base 71 s'étend le long d'une ligne fermée pour représenter le pourtour d'une ouverture inférieure 56, cette ouverture inférieure représentant une section d'interface entre l'espace interne INT et le milieu extérieur EXT. L'ouverture inférieure est destinée à déboucher sur le carter inférieur.

Eventuellement, la base 71 comporte une gorge 72 ouverte sur le milieu extérieur EXT. La gorge 72 est destinée à être en regard du carter inférieur. La gorge est dimensionnée pour accueillir un joint d'étanchéité 74. La base 71 peut être coincée entre l'embase d'enveloppe et le carter inférieur.

Le sommet 75 peut aussi avoir une forme de couronne, au sens large du terme, qui n'est pas nécessairement circulaire. Ainsi, le sommet 75 s'étend le long d'une ligne fermée pour représenter le pourtour d'une ouverture supérieure 61, cette ouverture supérieure 61 représentant une section d'interface entre l'espace interne INT et le milieu extérieur EXT. L'ouverture supérieure est destinée à déboucher sur le carter de portance. Le sommet 75 peut être plaqué directement contre la collerette d'enveloppe, ou peut être plaqué contre un insert qui est lui-même accolé contre la collerette d'enveloppe.

La base 71 et le sommet 75 sont reliés l'un à l'autre par au moins deux jambes 73. Chaque jambe 73 s'étend ainsi en élévation parallèlement à la face interne, voire contre la face interne, de la base 71 jusqu'au sommet 75.

De plus, la doublure 70 comprend au moins un support d'équipement 80 au regard d'une découpe 54.

La doublure 70 comprend par exemple, au moins autant de supports d'équipement 80 que de découpes 54. La doublure 70 comprend ainsi au moins un support d'équipement 80 en regard de chaque découpe 54. En effet, chaque découpe 54 a pour fonction de permettre l'accès à un support d'équipement.

Un support d'équipement 80 peut être porté par au moins une jambe 73, au moins la base 71 ou le sommet 75 de la doublure 70.

Une telle doublure peut être fabriquée par exemple par une méthode d'impression en trois dimensions. En particulier, la doublure n'ayant pas nécessairement de fonction structurelle, cette doublure peut être fabriquée au moins partiellement voire en totalité avec un matériau du groupe des matières thermodurcissables.

La figure 2 illustre un premier support d'équipement 300 porté par une jambe, un deuxième support d'équipement 400 porté par deux jambes et un troisième support d'équipement 80, 500 porté par le sommet 75.

Chaque support d'équipement 80 est destiné à porter un équipement 81 amovible dudit carter supérieur 40. Un équipement 81 peut prendre la forme d'un capteur de mesure d'une vitesse de rotation mesurant une vitesse de rotation du mât rotor, d'un capteur fournissant un signal déterminant le début ou la fin d'un tour effectué par le mât rotor, d'un bouchon magnétique permettant de capter de la limaille au sein d'un liquide...

Par ailleurs, le sommet 75 peut être muni d'un larmier 76. Ce larmier 76 est destiné à être localisé à proximité et dessous un moyen de projection 23 d'un mât rotor apte à projeter vers le larmier un liquide de lubrification.

Le larmier 76 peut avoir une section, en forme de L couché ou en U, ouverte vers la collerette d'enveloppe 60 pour recueillir ce liquide de lubrification. Une section en U comporte un fond 106 et deux branches latérales, une section L couché comportant un fond et une branche latérale. Au moins deux jambes 73, voire chaque jambe, peuvent être solidaires du larmier 76.

Par ailleurs, au moins une jambe 73 peut comporter un conduit 77 formant une tuyauterie intégrée de la doublure 70. Dès lors, une telle jambe 73 délimite en son sein un tel conduit 77.

En référence à la figure 5, la doublure 70 peut comporter un dispositif pour détecter de la présence de limaille métallique au sein du liquide de lubrification récolté par le larmier 76. Ce dispositif peut comporter une tuyauterie supérieure 101 qui s'étend du fond 106 du larmier 76 jusqu'à un support d'équipement 80. Ce support d'équipement 80 présente un boîtier 103 délimitant une cavité 104 ouverte sur la tuyauterie supérieure 101. De plus, ce support d'équipement 80 présente un canal 105 qui débouche sur la cavité 104 et sur le milieu l'extérieur EXT via une découpe 54.

Dès lors, un bouchon magnétique 83 amovible peut être introduit dans le support d'équipement pour obturer le canal 105 et déboucher dans la cavité. Le liquide de lubrification s'écoule ainsi du larmier 76 jusqu'à la cavité 104. Le bouchon magnétique peut ainsi détecter la présence de limaille dans le liquide de lubrification passant dans la cavité.

Pour évacuer le liquide de lubrification en dehors de la cavité 104, la doublure 70 comprend une tuyauterie inférieure 102 partant de la cavité 104 vers, voire jusqu'à, l'embase d'enveloppe 55.

La figure 6 illustre un support d'équipement portant par exemple un capteur de mesure d'une vitesse de rotation 82.

Le capteur de mesure d'une vitesse de rotation 82 peut être fixé au support d'équipement par des moyens usuels, tels que des goujons par exemple. De plus, un moyen de renforcement métallique 600 peut être agencé entre la coque et le support d'équipement, ce moyen de renforcement métallique étant interposé entre le capteur de mesure d'une vitesse de rotation 82 et le support d'équipement.

Selon un autre aspect et en référence à la figure 3, le carter supérieur 40 peut comporter un insert 85 pour fixer la collerette d'enveloppe 60 à un carter de portance.

L'insert 85 peut avoir une forme de couronne, au sens large du terme, qui n'est pas nécessairement circulaire. L'insert peut être conformé à la forme de la collerette d'enveloppe 60. Ainsi, l'insert 85 s'étend le long d'une ligne fermée pour représenter le pourtour d'une ouverture inférieure 56.

L'insert 85 représenté est agencé en élévation entre la collerette d'enveloppe 60 et le sommet 75 de la doublure 70. En particulier, l'insert 85 est plaqué contre la face d'appui inférieure 62 de la collerette d'enveloppe 60.

Cet insert 85 est muni de trous filetés 86. Chaque trou fileté 86 est aligné avec un orifice 64 traversant de la collerette d'enveloppe 60. Ainsi, un moyen de vissage, et par exemple un boulon, peut traverser un carter de portance ainsi que la collerette d'enveloppe 60 et l'insert 85, en coinçant la collerette d'enveloppe 60 entre le carter de portance 32 et l'insert 85.

Par exemple, l'insert comporte une plaque portant des bagues filetées formant lesdits trous filetés, cette plaque étant accolée contre la collerette d'enveloppe 60.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Carter supérieur (40) destiné à être fixé à un carter inférieur (31) et à un carter de portance (32) d'une boîte de transmission de puissance (15),
**caractérisé en ce que** le carter supérieur (40) comporte :
- une coque (50) creuse en matériaux composites, ladite coque (50) présentant une paroi latérale (51) s'étendant en élévation d'une embase d'enveloppe (55) ouverte vers une collerette d'enveloppe (60) ouverte, ladite paroi latérale (51) délimitant transversalement un espace interne (INT) creux de la coque s'étendant le long d'un axe d'extension (AX) et débouchant sur un milieu extérieur (EXT) situé à l'extérieur de la coque (50) via une ouverture inférieure (56) de l'embase d'enveloppe (55) et une ouverture supérieure (61) de la collerette d'enveloppe (60), ladite paroi latérale (51) comportant au moins une découpe (54), ladite collerette d'enveloppe (60) étant destinée à être fixée au carter de portance (32) et ladite embase d'enveloppe (55) étant destinée à être fixée au carter inférieur (31),
- une doublure (70) interne qui est insérée dans la coque (50) et fixée à la coque (50), la doublure (70) comprenant une base (71) en forme de couronne décrivant une ligne fermée et un sommet (75) en forme de couronne décrivant une autre ligne fermée, au moins deux jambes (73) s'étendant en élévation de la base (71) au sommet (75), la doublure (70) comprenant au moins un support d'équipement (80) au regard d'une dite découpe (54), chaque support d'équipement (80) étant destiné à porter un équipement (81) amovible dudit carter supérieur (40).

2. Carter supérieur selon la revendication 1,
**caractérisé en ce que** ladite coque (50) comporte une tresse multidirectionnelle (91), et une pluralité de plis de renfort (92) local unidirectionnels, chaque pli de renfort (92) comprenant des fibres préimprégnées s'étendant en élévation.

3. Carter supérieur selon la revendication 1,
**caractérisé en ce que** ladite embase d'enveloppe (55) comporte au moins localement un renfort métallique ou composite (93) agencé entre des plis de fibres, ledit renfort (93) comprenant des passages (95) en vis-à-vis d'alvéoles (96) desdits plis de fibres, les passages (95) et lesdites alvéoles (96) étant destinés à être traversés par des moyens de vissage (97).

4. Carter supérieur selon l'une quelconque des revendications 1 à 3,
**caractérisé en ce que** la doublure (70) est réalisée à partir d'un matériau du groupe des matières thermodurcissables.

5. Carter supérieur selon l'une quelconque des revendications 1 à 4,
**caractérisé en ce que** la collerette d'enveloppe (60) s'étendant en élévation d'une face d'appui inférieure (62) plane à une face d'appui supérieure (63) plane qui est destinée à être agencée contre ledit carter de portance (32), ledit carter supérieur (40) comporte un insert (85) en forme de couronne agencé en élévation entre la collerette d'enveloppe (60) et le sommet (75) de la doublure (70), l'insert (85) étant apposé contre la face d'appui inférieure (62), l'insert (85) comprenant des trous filetés (86), chaque trou fileté (86) étant aligné avec un orifice (64) traversant de la collerette d'enveloppe (60).

6. Carter supérieur selon l'une quelconque des revendications 1 à 5,
**caractérisé en ce que** la collerette d'enveloppe (60) s'étend de la paroi latérale (51) vers l'axe d'extension (AX), l'embase d'enveloppe (55) s'étendant à partir de la paroi latérale (51) en s'éloignant de l'axe d'extension (AX).

7. Carter supérieur selon l'une quelconque des revendications 1 à 6,
**caractérisé en ce que** la doublure (70) comprend un support d'équipement (80) en regard de chaque dite découpe (54).

8. Carter supérieur selon l'une quelconque des revendications 1 à 7,
**caractérisé en ce que** ledit sommet (75) comporte un larmier (76), ledit larmier (76) ayant une section ouverte vers la collerette d'enveloppe (60), au moins deux jambes (73) étant solidaires du larmier (76).

9. Carter supérieur selon l'une quelconque des revendications 1 à 8,
**caractérisé en ce qu'**au moins une jambe (73) comporte un conduit (77) formant une tuyauterie intégrée de la doublure (70).

10. Carter supérieur selon la revendication 8,
**caractérisé en ce que** la doublure (70) comporte au moins une tuyauterie supérieure (101) qui s'étend d'un fond (106) dudit larmier (76) jusqu'à un support d'équipement (80), ce support d'équipement (80) présentant une cavité (104) ouverte sur la tuyauterie supérieure (101), ce support d'équipement (80) présentant un canal (105) qui débouche sur ladite cavité (104) et sur ledit milieu l'extérieur (EXT) via une dite découpe (54), un bouchon magnétique (83) amovible obturant ledit canal (105), la doublure (70) comprenant une tuyauterie inférieure (102) partant de ladite cavité (104) vers ladite embase d'enveloppe (55).

11. Carter supérieur selon l'une quelconque des revendications 1 à 10,
**caractérisé en ce que** ladite base (71) comporte une gorge (72) apte à accueillir un joint d'étanchéité (74).

12. Carter supérieur selon l'une quelconque des revendications 1 à 11,
**caractérisé en ce qu'**au moins un support d'équipement (80) est porté par au moins une jambe (73).

13. Carter supérieur selon l'une quelconque des revendications 1 à 12,
**caractérisé en ce qu'**au moins un support d'équipement (80) est porté par au moins la base (71) ou le sommet (75) de la doublure (70).

14. Carter supérieur selon l'une quelconque des revendications 1 à 13,
**caractérisé en ce que** ladite doublure (70) est collée à ladite coque (50).

15. Boîte de transmission de puissance (15) comprenant une enveloppe extérieure (30), ladite enveloppe extérieure (30) comprenant un carter inférieur (31) fixé à un carter supérieur (40) ainsi qu'un carter de portance (32) fixé au carter supérieur (40), **caractérisée en ce que** ledit carter supérieur (40) est selon l'une quelconque des revendications 1 à 14.

16. Boîte de transmission de puissance selon la revendication 15,
**caractérisée en ce que**, la boîte de transmission de puissance (15) comprenant un mât rotor (22), au moins un capteur de mesure d'une vitesse de rotation (82) mesurant une vitesse de rotation du mât rotor (22) est fixé à un support d'équipement (80).

17. Aéronef (1) muni d'une boîte de transmission de puissance (15),
**caractérisé en ce que** ladite boîte de transmission de puissance (15) est selon l'une quelconque des revendications 15 à 16.

## Patentansprüche

1. Oberes Gehäuse (40) zur Befestigung an einem unteren Gehäuse (31) und einem Lagergehäuse (32) eines Leistungsübertragungsgetriebes (15),
**dadurch gekennzeichnet, dass** das obere Gehäuse (40) aufweist:
- eine hohle Schale (50) aus Verbundwerkstoffen, wobei die Schale (50) eine Seitenwand (51) aufweist, die sich in der Höhe von einer offenen Hüllenbasis (55) zu einem offenen Hüllenflansch (60) erstreckt, wobei die Seitenwand (51) in Querrichtung einen hohlen Innenraum (INT) der Schale begrenzt, der sich entlang einer Verlängerungsachse (AX) erstreckt und auf eine äußere Umgebung (EXT) außerhalb der Hülle (50) über eine untere Öffnung (56) der Hüllenbasis (55) und eine obere Öffnung (61) des Hüllenflansches (60) mündet, wobei die Seitenwand (51) mindestens einen Ausschnitt (54) aufweist, der Hüllenflansch (60) vorgesehen ist, um am Lagergehäuse (32) befestigt zu werden, und die Hüllenbasis (55) vorgesehen ist, um an dem unteren Gehäuse (31) befestigt zu werden,
- eine Innenauskleidung (70), die in die Schale (50) eingesetzt und an der Schale (50) befestigt ist, wobei die Auskleidung (70) eine kranzförmige Basis (71), die eine geschlossene Linie beschreibt, und einen kranzförmigen Scheitel (75) umfasst, der eine weitere geschlossene Linie beschreibt, wobei sich mindestens zwei Schenkel (73) in der Höhe von der Basis (71) bis zum Scheitel (75) erstrecken, wobei die Auskleidung (70) mindestens einen Ausrüstungsträger (80) gegenüber einem der Ausschnitte (54) umfasst, wobei jeder Ausrüstungsträger (80) vorgesehen ist, um eine abnehmbare Ausrüstung (81) des oberen Gehäuses (40) zu tragen.

2. Oberes Gehäuse nach Anspruch 1,
**dadurch gekennzeichnet, dass** die Schale (50) ein multidirektionales Geflecht (91) und eine Mehrzahl von lokalen unidirektionalen Verstärkungsfalten (92) aufweist, wobei jede Verstärkungsfalte (92) sich in der Höhe erstreckende Prepregfasern umfasst.

3. Oberes Gehäuse nach Anspruch 1,
**dadurch gekennzeichnet, dass** die Hüllenbasis (55) zumindest lokal eine zwischen Faserfalten angeordnete Metall- oder Verbundverstärkung (93) aufweist, wobei die Verstärkung (93) Durchgänge (95) aufweist, die Zellen (96) der Faserfalten zugewandt sind, wobei die Durchgänge (95) und die Zellen (96) vorgesehen sind, um von Schraubmitteln (97) durchquert zu werden.

4. Oberes Gehäuse nach einem der Ansprüche 1 bis 3,
**dadurch gekennzeichnet, dass** die Auskleidung (70) aus einem Material aus der Gruppe der duroplastischen Materialien hergestellt ist.

5. Oberes Gehäuse nach einem der Ansprüche 1 bis 4,
**dadurch gekennzeichnet, dass** sich der Hüllenflansch (60) in der Höhe von einer flachen unteren Auflagefläche (62) zu einer flachen oberen Auflagefläche (63) erstreckt, die dazu bestimmt ist, an dem Lagergehäuse (32) angeordnet zu werden, dass das obere Gehäuse (40) einen kranzförmigen Einsatz (85) aufweist, der in der Höhe zwischen dem Hüllenflansch (60) und dem Scheitel (75) der Auskleidung (70) angeordnet ist, wobei der Einsatz (85) an die untere Auflagefläche (62) angefügt ist, und dass der Einsatz (85) Gewindelöcher (86) aufweist, wobei jedes Gewindeloch (86) auf eine Öffnung (64) ausgerichtet ist, die durch den Hüllenflansch (60) verläuft.

6. Oberes Gehäuse nach einem der Ansprüche 1 bis 5,
**dadurch gekennzeichnet, dass** sich der Hüllenflansch (60) von der Seitenwand (51) zur Verlängerungsachse (AX) hin erstreckt und sich die Hüllenbasis (55) von der Seitenwand (51) aus von der Verlängerungsachse (AX) weg erstreckt.

7. Oberes Gehäuse nach einem der Ansprüche 1 bis 6,
**dadurch gekennzeichnet, dass** die Auskleidung (70) einen Ausrüstungsträger (80) umfasst, der jedem der Ausschnitte (54) gegenüberliegt.

8. Oberes Gehäuse nach einem der Ansprüche 1 bis 7,
**dadurch gekennzeichnet, dass** der Scheitel (75) eine Auffangschiene (76) aufweist, wobei die Auffangschiene (76) einen zum Hüllenflansch (60) hin offenen Querschnitt aufweist, wobei mindestens zwei Schenkel (73) mit der Auffangschiene (76) fest verbunden sind.

9. Oberes Gehäuse nach einem der Ansprüche 1 bis 8,
**dadurch gekennzeichnet, dass** mindestens ein Schenkel (73) eine Leitung (77) aufweist, die eine integrierte Rohrleitung der Auskleidung (70) bildet.

10. Oberes Gehäuse nach Anspruch 8,
**dadurch gekennzeichnet, dass** die Auskleidung (70) mindestens eine obere Rohrleitung (101) aufweist, die sich von einem Boden (106) der Auffangschiene (76) zu einem Ausrüstungsträger (80) erstreckt, wobei der Ausrüstungsträger (80) einen Hohlraum (104) aufweist, der zu der oberen Rohrleitung (101) offen ist, der Ausrüstungsträger (80) einen Kanal (105) aufweist, der in den Hohlraum (104) und auf die äußere Umgebung (EXT) über einen Ausschnitt (54) mündet, wobei ein abnehmbarer magnetischer Stopfen (83) den Kanal (105) verschließt, und wobei die Auskleidung (70) eine untere Rohrleitung (102) umfasst, die sich von dem Hohlraum (104) zu der Hüllenbasis (55) erstreckt.

11. Oberes Gehäuse nach einem der Ansprüche 1 bis 10,
**dadurch gekennzeichnet, dass** die Basis (71) eine Nut (72) aufweist, die eingerichtet ist, um einen Dichtungsring (74) aufzunehmen.

12. Oberes Gehäuse nach einem der Ansprüche 1 bis 11,
**dadurch gekennzeichnet, dass** mindestens ein Ausrüstungsträger (80) von mindestens einem Schenkel (73) getragen ist.

13. Oberes Gehäuse nach einem der Ansprüche 1 bis 12,
**dadurch gekennzeichnet, dass** mindestens ein Ausrüstungsträger (80) von mindestens der Basis (71) oder dem Scheitel (75) der Auskleidung getragen ist.

14. Oberes Gehäuse nach einem der Ansprüche 1 bis 13,
**dadurch gekennzeichnet, dass** die Auskleidung (70) mit der Hülle (50) verklebt ist.

15. Leistungsübertragungsgetriebe (15) mit einer äußeren Hülle (30), wobei die äußere Hülle (30) ein unteres Gehäuse (31), das an einem oberen Gehäuse (40) befestigt ist, und ein Lagergehäuse (32), das an dem oberen Gehäuse (40) befestigt ist, umfasst,
**dadurch gekennzeichnet, dass** das obere Gehäuse (40) nach einem der Ansprüche 1 bis 14 ist.

16. Leistungsübertragungsgetriebe nach Anspruch 15,
**dadurch gekennzeichnet, dass** das Leistungsübertragungsgetriebe (15) einen Rotormast (22) umfasst, und dass mindestens ein Drehzahlmessaufnehmer (82) zum Messen einer Drehzahl des Rotormastes (22) an einem Ausrüstungsträger (80) befestigt ist.

17. Luftfahrzeug (1), das mit einem Leistungsübertragungsgetriebe (15) ausgestattet ist,
**dadurch gekennzeichnet, dass** das Leistungsübertragungsgetriebe (15) nach einem der Ansprüche 15 bis 16 ist.

## Claims

1. Upper casing (40) intended to be attached to a lower casing (31) and to a lift housing (32) of a gearbox (15), **characterised in that** the upper casing (40) comprises:
- a hollow shell (50) made of composite materials, said shell (50) having a side wall (51) extending in elevation from an open housing base (55) to an open housing collar (60), said side wall (51) transversely defining a hollow internal space (INT) of the shell extending along an extension axis (AX) and opening on to an external environment (EXT) situated outside the shell (50) via a lower aperture (56) of the housing base (55) and an upper aperture (61) of the housing collar (60), said side wall (51) comprising at least one cut-out (54), said housing collar (60) being intended to be attached to the lift housing (32) and said housing base (55) being intended to be attached to the lower casing (31),
- an internal liner (70) which is inserted into the shell (50) and attached to the shell (50), the liner (70) comprising a crown-shaped base (71) describing a closed line and a crown-shaped top (75) describing another closed line, at least two legs (73) extending in elevation from the base (71) to the top (75), the liner (70) comprising at least one apparatus holder (80) facing a said cut-out (54), each apparatus holder (80) being intended to support a detachable apparatus (81) of said upper casing (40).

2. Upper casing according to claim 1, **characterised in that** said shell (50) comprises a multidirectional braid (91) and a plurality of unidirectional local reinforcement plies (92), each reinforcement ply (92) comprising pre-impregnated fibres extending in elevation.

3. Upper casing according to claim 1, **characterised in that** said housing base (55) comprises at least locally a metal or composite reinforcement (93) arranged between plies of fibres, said reinforcement (93) comprising channels (95) facing cavities (96) of said plies of fibres, the channels (95) and said cavities (96) being intended to be passed through by screwing means (97).

4. Upper casing according to any one of claims 1 to 3, **characterised in that** the liner (70) is made from a material in the thermosetting materials group.

5. Upper casing according to any one of claims 1 to 4, **characterised in that** the housing collar (60) extending in elevation from a planar lower bearing surface (62) to a planar upper bearing surface (63) which is intended to be arranged against said lift housing (32), said upper casing (40) comprises a crown-shaped insert (85) arranged in elevation between the housing collar (60) and the top (75) of the liner (70), the insert (85) being placed against the lower bearing surface (62), the insert (85) comprising threaded holes (86), each threaded hole (86) being aligned with a through-hole (64) of the housing collar (60).

6. Upper casing according to any one of claims 1 to 5, **characterised in that** the housing collar (60) extends from the side wall (51) towards the extension axis (AX), the housing base (55) extending from the side wall (51) in an outward direction from the extension axis (AX).

7. Upper casing according to any one of claims 1 to 6, **characterised in that** the liner (70) comprises an apparatus holder (80) facing each said cut-out (54).

8. Upper casing according to any one of claims 1 to 7, **characterised in that** said top (75) comprises a gutter (76), said gutter (76) being of a section open to the housing collar (60), at least two legs (73) being secured to the gutter (76).

9. Upper casing according to any one of claims 1 to 8, **characterised in that** at least one leg (73) comprises a channel (77) forming a piping system built into the liner (70).

10. Upper casing according to claim 8, **characterised in that** the liner (70) comprises at least one upper piping system (101) which extends from a base (106) of said gutter (76) to an apparatus holder (80), this apparatus holder (80) having a cavity (104) open to the upper piping system (101), this apparatus holder (80) having a channel (105) which opens into said cavity (104) and on to said external environment (EXT) via a said cut-out (54), a detachable magnetic plug (83) sealing said channel (105), the liner (70) comprising a lower piping system (102) extending from said cavity (104) towards said housing base (55).

11. Upper casing according to any one of claims 1 to 10, **characterised in that** said base (71) comprises a groove (72) capable of receiving a seal (74).

12. Upper casing according to any one of claims 1 to 11, **characterised in that** at least one apparatus holder (80) is supported by at least one leg (73).

13. Upper casing according to any one of claims 1 to 12, **characterised in that** at least one apparatus holder (80) is supported by at least the base (71) or the top (75) of the liner (70).

14. Upper casing according to any one of claims 1 to 13, **characterised in that** said liner (70) is bonded to said shell (50).

15. Gearbox (15) comprising an external housing (30), said external housing (30) comprising a lower casing (31) attached to an upper casing (40) and a lift housing (32) attached to the upper casing (40), **characterised in that** said upper casing (40) is according to any one of claims 1 to 14.

16. Gearbox according to claim 15, **characterised in that**, the gearbox (15) comprising a rotor mast (22), at least one rotational speed measuring sensor (82) measuring a rotational speed of the rotor mast (22), is attached to an apparatus holder (80).

17. Aircraft (1) provided with a gearbox (15), **characterised in that** said gearbox (15) is according to any one of claims 15 to 16.
